# EUROPEAN PATENT APPLICATION

(11) **EP 2 141 942 A1**
(43) Date of publication of application: **06.01.2010**
(21) Application number: 08159439.2
(22) Date of filing: 01.07.2008
(51) Int. Cl.: H04W 4/00

(54) **Autonomous configuration of communication network**

(71) Applicant: Nokia Siemens Networks Oy, 02610 Espoo (FI)
(72) Inventor: Goldberg, Martin, 86926Greifenberg (DE); Pollakowski, Olaf, 10629 Berlin (DE); Kausl, Raimund, 70597 Stuttgart (DE)
(74) Representative: TBK-Patent

(57) **Abstract**

A mechanism for autonomously configuring a communication network is described. After a registration of communication network elements is effected at a server and a presence of an unknown neighboring communication cell is detected at a communication network node, information regarding another communication network node to which the neighboring communication cell is assigned may be requested from the server. The server may process the request and return corresponding information to the requesting communication network node. Thus, the network configuration at the server and the communication network node can be organized.

## Description

### BACKGROUND OF THE INVENTION

### Field of the invention

The present invention relates to an improved mechanism for autonomously configuring a communication network. In particular, the present invention relates to apparatuses and methods providing an improved procedure for self-learning and configuring repository for access network cell and site configuration.

### Related prior art

In the last years, an increasing extension of communication networks, e.g. of wire based communication networks, such as the Integrated Services Digital Network (ISDN), or wireless communication networks, such as the cdma2000 (code division multiple access) system, cellular 3rd generation (3G) communication networks like the Universal Mobile Telecommunications System (UMTS), cellular 2nd generation (2G) communication networks like the Global System for Mobile communications (GSM), the General Packet Radio System (GPRS), the Enhanced Data Rates for Global Evolutions (EDGE), or other wireless communication system, such as the Wireless Local Area Network (WLAN) or WiMAX (Worldwide Interoperability for Microwave Access), took place all over the world. Various organizations, such as the 3^{rd} Generation Partnership Project (3GPP), the International Telecommunication Union (ITU), 3^{rd} Generation Partnership Project 2 (3GPP2), Internet Engineering Task Force (IETF), the IEEE (Institute of Electrical and Electronics Engineers) and the like are working on standards for telecommunication network and access environments.

With the emergence of packet-based wireless broadband systems such as WiMAX, also other systems like the Universal Mobile Telecommunications System (UMTS) is developed further to cope with increasing performance demands. As one example, the Long Term Evolution (LTE) of the UMTS Terrestrial Radio Access and Radio Access Network is under development. Goals for the evolved system include support for improved system capacity and coverage, high peak data rates, low latency, reduced operating costs, multi-antenna support, flexible bandwidth operations and seamless integration with existing systems.

For future wireless networks, such as 3GPP Long-Term Evolution (LTE) based networks, it is tried to reduce total cost of ownership for the operators. For this purpose, for example, automated configuration and optimization procedures are developed.

With the introduction of LTE as a new radio interface technology for mobile radio access further networks of new base stations (i.e. enhanced NodeBs or eNBs) will be installed in addition and parallel to to legacy 2G, 3G and CDMA networks, for example. However, due to the limited resources of operator personal, installation of new network sites and parts is cost intensive and complicated. Therefore, in order to reduce the Operational Expenditure (OPEX) for LTE networks, it is tried to improve the Self Organizing Network (SON) capabilities of the LTE network system, in particular self-configuration and optimization aspects.

In current legacy mobile network the configuration of neighborhood relation is done by off-line created vendor specific configuration files. Based on the radio network overall planning, the operator needs to carefully identify and configure all neighboring cell for each new deployed site (eNB) and to reorganize the existing configuration files of existing sites (other eNBs or the like) in case a new eNB is added or removed from the network or re-located within the network. The according planning incorporating the radio condition is complex and therefore the maintenance effort is high (in case of a scattered multi vendor base station deployment the efforts are even higher). On the other hand, in case the planning of the neighbor relegation is not properly done, then severe disturbances may be the result, e.g. an increase of a call drop rate due to failed handover.

Currently, configuration of communication networks, in particular of the access network cell and site configuration, is executed by manual planning (or replanning in case of changes in the network architecture). An input for the neighborhood relation maintenance and optimization is retrieved, for example, from test drives, complex performance counter evaluation, and service behavior analysis. Also customer complaints are used as a source. Thus, the configuration work requires the interwork of several operator departments, each responsible for network planning, node configuration, operation, service etc. Hence, the configuration is work and cost intensive and has also the liability to errors or disturbances due to the high number of different departments.

### SUMMARY OF THE INVENTION

Thus, it is an object of the invention to provide an improved mechanism for configuring a communication network, in particular for self-learning and configuring repository for access network cell and site configuration.

This object is achieved by the measures defined in the attached claims.
According to one aspect of the proposed solution, there is provided, for example, an apparatus comprising a registration requestor configured to request a registration of a communication network node at a server, a detector configured to detect a presence of an unknown neighboring communication cell, an information requestor configured to request from the server information regarding another communication network node to which the neighboring communication cell is assigned, a receiver configured to receive the information, and a processor configured to process the received information.

Furthermore, according to one aspect of the proposed solution, there is provided, for example a method comprising requesting a registration of a communication network node at a server, detecting a presence of an unknown neighboring communication cell, requesting from the server information regarding another communication network node to which the neighboring communication cell is assigned, receiving the information, and processing the received information.

According to further refinements, the above defined method and apparatus may comprise one or more of the following features:
- the registration of the communication network node at the server may be requested in at least one of the following cases: initial start-up of the communication network node after an installation thereof; re-start of the communication network node after a reset operation; detection of a modification of a cell configuration of the communication network node; detection of a removal of at least one of cells of the communication network node; receipt of a non-acknowledgement after a preceding request for a registration;
- when requesting the registration of the communication network node at the server, at least one of a global identification of the communication network node, at least one public routable site Internet Protocol address of the communication network node, and a global cell identification of at least one cell assigned to the communication network node may be sent; additionally, when requesting the registration of the communication network node at the server, at least one of an assigned physical cell identifier, and streaming control protocol configuration information may be sent.
- information regarding the another communication network node may be requested after a global cell identification of the unknown neighboring cell is discovered;
- when requesting from the server the information regarding the another communication network node, a global identifier of the communication network node and an identifier of the unknown neighboring cell may be sent;
- processing of the received information may comprise processing of an information comprising one of connectivity information of the another communication network node and of cells assigned thereto, or an indication that no information can be provided on the request and a reason for this, wherein the reason may comprise an indication that no information for the another communication network node are present, or an indication that the requesting communication network node can not be identified by the server;
- processing may comprise to initiate establishing of a connection between the communication network node and the another communication network node, on the basis of the information received by the receiver, and to request further information from the another communication network node;
- the communication network node and the another communication network node may comprise at least one of an enhanced Node B and a base transceiver station of the communication network.

According to a further aspect of the proposed solution, there is provided, for example, an apparatus comprising a receiver configured to receive a request for registration of a communication network element, a registrator configured to execute the registration of the communication network node, a storage configured to store information of the communication network node, a responder configured to send a message to the communication network node related to the registration thereof, an information request receiver configured to receive a request from the communication network node for information regarding another communication network node on the basis of cell related information, a request processor configured to compare information received with the request for information regarding the another communication network node with information stored in the storage, and to determine information to be returned to the requesting communication network node on the basis of the comparison, and a request responder configured to respond to the request from the communication network node for information regarding another communication network node on the basis of the information determined by the processor.

Furthermore, according to one aspect of the proposed solution, there is provided, for example a method comprising receiving a request for registration of a communication network element, executing the registration of the communication network node, storing information of the communication network node, sending a message to the communication network node related to the registration thereof, receiving a request from the communication network node for information regarding another communication network node on the basis of cell related information, processing the request by comparing information received with the request for information regarding the another communication network node with information stored in the storage, and determining information to be returned to the requesting communication network node on the basis of the comparison, and responding to the request from the communication network node for information regarding another communication network node on the basis of the determined information.

According to further refinements, the above defined method and apparatus may comprise one or more of the following features:
- the registration of the communication network element may be executed on the basis of at least one of a global identification of the communication network node, at least one public routable site Internet Protocol address of the communication network node, and a global cell identification of at least one cell assigned to the communication network node; additionally, the registration of the communication network element may be executed on the basis of at least one of an assigned physical cell identifier, and streaming control protocol configuration information;
- a message may be sent to the communication network node related to the registration thereof, said message may either confirming the registration of the communication network element or indicating a non-acknowledgement of the registration together with a reason for this;
- on the basis of the information received by the request receiver, a global identifier of the communication network node and an identifier of a cell of the another communication network node may be processed;
- as the information to be returned to the requesting communication network node, one of connectivity information of the another communication network node and of cells assigned thereto, or an indication that no information can be provided on the request and a reason for this, wherein the reason may comprise an indication that no information for the another communication network node are present, or an indication that the requesting communication network node can not be identified, may be determined;
- the communication network node and the another communication network node may comprise at least one of an enhanced Node B and a base transceiver station of the communication network.
   According to a further aspect of the proposed solution, there is provided, for example, a method comprising executing registration of at least one communication network element at a server, storing information of the registered communication network node in the server, detecting at a communication network node a presence of an unknown neighboring communication cell, requesting, by the communication network node, from the server information regarding another communication network node to which the neighboring communication cell is assigned, processing the request by comparing information received with the request for information regarding the another communication network node with information stored in the storage, and determining information to be returned to the requesting communication network node on the basis of the comparison, and responding to the requesting communication network node, organizing a network configuration at the server and the communication network node.
   Still further, according to one aspect of the proposed solution, there is provided, for example, a computer program product for a computer, comprising software code portions for performing the steps of the above defined methods when said product is run on the computer; the computer program product may comprise a computer-readable medium on which said software code portions are stored; also, the computer program product is directly loadable into the internal memory of the computer.
   By virtue of the proposed solutions, it is possible to achieve several advantages.
   By employing the mechanism according to the invention, it is possible to achieve a communication network configuration providing a reduced OPEX (operating expenditures). In particular the capability of a new installed eNB to get identified and configured automatically by the network on one hand and on the other hand the ability of the operating eNB to identify new installed neighbor sites and connect to each other autonomously are the basic bricks for OPEX reductions.
   By providing of an autonomous and self-learning solution as a replacement of the previously used manual solution, the interwork of several operator departments may be facilitated. Thus, the reliability of the configuration work may be enhanced. Furthermore, it is possible to eliminate unuseful aspects from architectural scenario.
   The invention may be in particular, but not exclusively, useful for an employment in systems according 3GPP, LTE, NGMN (Next Generation Mobile Network) which is an association of leading mobile network operators.
   The above and still further objects, features and advantages of the invention will become more apparent upon referring to the description and the accompanying drawings.

### BRIEF DESCRIPTION OF THE DRAWINGS

Fig. 1 shows a simplified structure of a communication network system where a configuration procedure according to an example of an embodiment of the invention is executed;
Fig. 2 shows a signalling diagram of a registration procedure in the communication network configuration;
Fig. 3 shows a signalling diagram of a query or information request procedure in the communication network configuration;
Fig. 4 shows a block circuit diagram of a communication network node according to an example of an embodiment of the invention;
Fig. 5 shows a block circuit diagram of a server node according to an example of an embodiment of the invention; and
Fig. 6 shows a flow chart of a configuration procedure according to an example of an embodiment of the invention.

### DESCRIPTION OF PREFERRED EMBODIMENTS

In the following, examples and embodiments of the present invention are described with reference to the drawings. For illustrating the present invention, an example of an application in a system according to 3GPP specifications for LTE is described. However, it is to be noted that embodiments of the present invention are not limited to an application in such a system or environment but may also be applicable in other network systems, connection types and the like, for example in networks according to other 3GPP specifications, IEEE specifications, or the like.

A basic system architecture of a communication network may comprise a commonly known architecture of a wired or wireless access network subsystem. Such an architecture may comprise one or more access network control units, radio access network elements or base stations, with which a terminal device as a user equipment may be capable to communicate via one or more channels for transmitting several types of data. The general functions and interconnections of these elements are known to those skilled in the art and described in corresponding specifications so that a detailed description thereof is omitted herein. However, it is to be noted that there may be provided several additional network elements and signaling links used for a communication connection or a call between terminals like user equipments and network elements.

Furthermore, an access network element, the server node (representing a configuration control element) as well as their respective functions as described herein may be implemented by software, e.g. by a computer program product for a computer, or by hardware. In any case, for executing their respective functions, correspondingly used devices, such as a network element like a base transceiver station, a Node B, and enhanced Node B (eNB), and the like may comprise several means and components (partly not shown) which may be required for control, processing and communication/signaling functionality. Such means may comprise, for example, a processor unit for executing instructions, programs and for processing data, memory means for storing instructions, programs and data, for serving as a work area of the processor and the like (e.g. ROM, RAM, EEPROM, and the like), input means for inputting data and instructions by software (e.g. floppy diskette, CD-ROM, EEPROM, and the like), user interface means for providing monitor and manipulation possibilities to a user (e.g. a screen, a keyboard and the like), interface means for establishing links and/or connections under the control of the processor unit (e.g. wired and wireless interface means, an antenna, etc.) and the like.

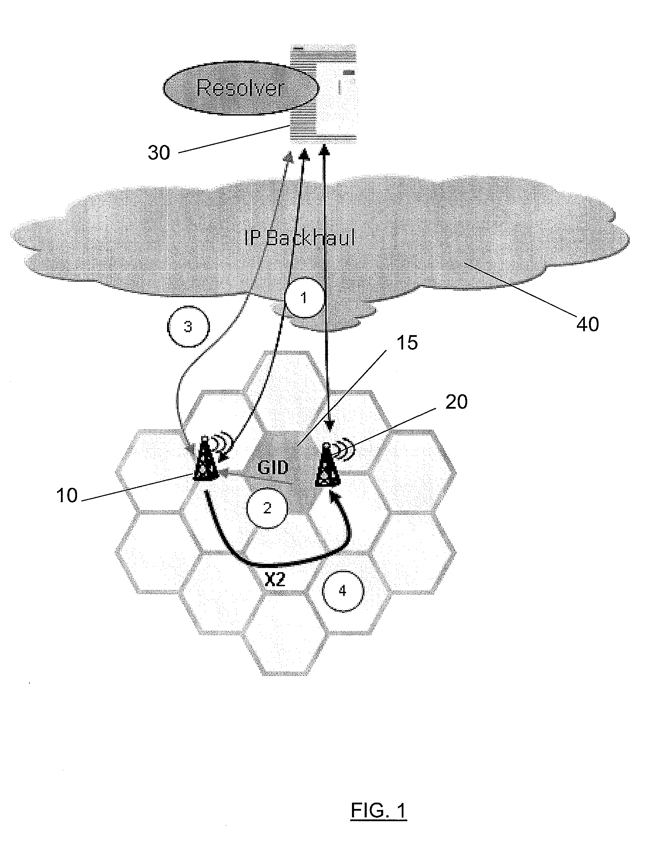

As an illustrative example for an implementation not limiting the general concept of the invention, Fig. 1 shows a simplified diagram of an architecture of a communication network to which the present invention may be applicable, i.e. only those elements are depicted which are useful for understanding the principles of the invention. As depicted in Fig. 1, an example based on the 3GPP specifications for LTE is selected. However, it is to be noted that also other network systems may use the principles defined below, for example another 3GPP based network, a WLAN and the like, or network systems developed in the future and having similar basic functionalities. The respective network elements comprised by such network systems are generally known by those skilled in the art so that a detailed description thereof is omitted herein for the sake of simplicity. Furthermore, it is to be noted that the functional architecture may be designed into various hardware configurations rather than fixed configurations.

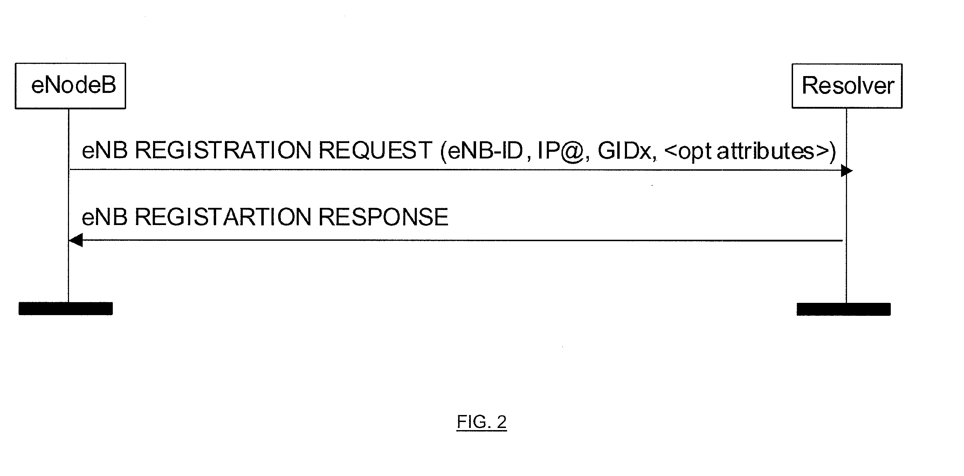

According to Fig. 1, the network may comprise, as a communication network node, a plurality of access network elements 10 and 20 (in Fig. 2, only two access network elements are shown for the sake of simplicity), such as base stations or eNBs. The access network elements may be, for example, base transceiver stations having a flexible system allowing operation under multiple modes and with different access technologies, for example according the 2G, 3G and LTE standards.

Each of the access network elements 10 and 20 may be responsible for controlling the communication in one or more separated communication areas or cells (indicated by hexagons in Fig. 1). This principle is also referred to as cellular architecture and known to those skilled in the art so that a further explanation thereof is omitted here.

To these access network elements 20 and 30, subscribers may be connected for establishing communication connections which is not shown in Fig. 1. In the following it is assumed that the access network element 10 represents a requesting site for the configuration procedure, while the access network element 20 represents a neighboring site. Furthermore, it is to be noted that more than two access network elements may be part of the network and involved in the described re-configuration procedures.

It is to be noted that different to the example shown in Fig. 1 there may be more than one neighboring site. The measures described below for the case of respective one requesting and neighboring site can be easily adapted to a higher number of sites, as is obviously derivable for the person skilled in the art.

Reference sign 15 denotes a cell of the access network element 20 which is in the neighborhood of the access network element 10 and will be referred to hereinafter as neighboring cell.

Reference sign 30 denotes a server or resolver as a configuration control element to which the access network elements 10 and 20 may be connectable via a backhaul network 40, such as an IP backhaul network. In the present example of an embodiment of the invention, the server 30 may represent a function that may serve queries from clients wherein each of the access network elements (eNB) may be a client. The server may be a separate network element or part of another control element.

By arrows 1 to 4 in Fig. 1, steps of the configuration procedure according to an example of an embodiment of the invention are indicated.

In step 1, each of the access network elements may execute a self-registration at the server or resolver 30. For example the access network element 10 (or 20) may register itself at the network server each time when the eNB starts up, e.g. after the initial installation and/or after a system reset. Furthermore, the self-registration may be executed when the own cell configuration of the access network element is modified or when one of its cells is permanently removed. Moreover, as will be described below, the self-registration may be executed (again) in case a request for information to the server 30 is denied with a reason "requester unknown", or the like.

The details of an example of an embodiment of the invention for a registration of the access network element are also shown in the signaling diagram of Fig. 2. According to this example, the eNB as the access network element 10 may send a registration request via the backhaul network 40 to the server or resolver 30 with specific information. This information may comprise, for example among others, at least one of an identification of the access network element, such as a Global eNB-ID, address information of the access network element, such as public routable site IP address or addresses (IP@), and identification information of the communication area or areas, such as cells for which the access network element is responsible, for example global cell identifiers (GIDs). Optionally, the access network element may register at the server further with additional parameters or optional attributes, such as assigned physical cell identifiers, SCTP (Streaming Control Protocol) configuration etc.

The server or resolver 30 may execute the registration of the access network element sending the request as shown in Fig. 2 at the upper arrow. This registration may comprise that the resolver 30 is able to store the information in a corresponding database or storage, and to send a response to the registration request (lower arrow in Fig. 2). This response may include either a confirmation of the successful registration or, if due any reason the resolver doesn't accept the registration, for example due to an unknown format or interfered transmission of the request message, a negative acknowledgement including reason information why the registration is not executed.

In case of receiving the confirmation at the access network element, the registration procedure is completed. Otherwise, in case of the negative acknowledgement, or if a predetermined time elapsed after sending the registration request without receiving a response message, for example, the access network element may repeat the registration attempt.

It is to be noted that the registration procedure as described above may be performed by every communication (access) network element being part of the system as depicted in Fig. 1.

Returning to Fig. 1, next, a procedure for requesting information from the server or resolver 30 for further configuring the network may be executed starting with step 2. In step 2, the access network element 10 may become aware of a new or currently unknown neighbor cell 15. For example, the access network element 10 may discover, by means of information provided by a user equipment or another measuring device located in the communication area thereof connected with the access network element 10, the Global Cell ID (GID) of this (new) neighboring cell 15.

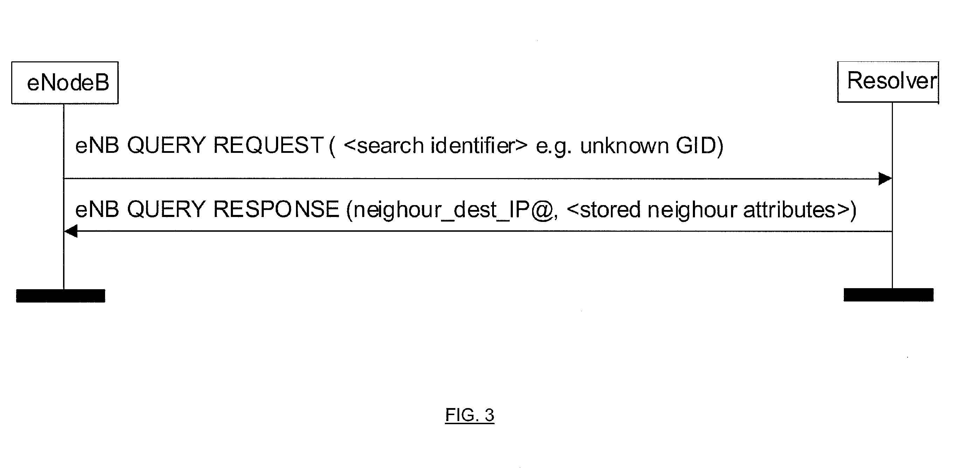

Since the discovered cell ID is not known, in step 3, the (requesting) access network element 10 may send a query to the resolver 30 for requesting available cell and site information which belongs to the access network element (in Fig. 1, element 20) being responsible for this discovered neighbour cell. Further details of this query procedure are explained with reference to Fig. 3.

According to Fig. 3, the requesting access network element (e.g. element 10) may send a query request to the server, e.g. via the backhaul network 40 to the server 30 (see upper arrow in Fig. 3). The request messages may comprises, for example, an identification of the requesting access network element, such as its own Global eNB Identifier, and information achieved for the new neighbour cell as a search identifier, such as the discovered GID.

The resolver may process the received information in the request information, for example by comparing the information about the requesting access network element and the search identifier with the information stored in the database which is achieved as a result of the preceding registration procedures for the access network elements.

As a result of this processing, information to be returned to the requesting access network element may be determined.

This information may comprise, for example, at least one of connectivity information of the other access network element (eNB 20), such as IP connectivity information (in particular the IP address) of the eNB parenting the given GID of the search identifier, and information related to cells of the other access network element 20 being stored in the repository of the server and linked to the same address of the other access network element. Otherwise, in case no matching result is achieved by the comparison in the database, the information to be returned to the requesting access network element 10 may comprise an indication of an empty result indicating that no entry could be found. Furthermore, as another option of the information to be returned to the requesting access network element 10, a negative response may be determined if the identification of the requesting access network element, such as the Global eNB Identifier of the requesting eNB, does not match with the resolver repository's entries.

The information determined in the processing at the resolver can then be returned to the requesting access network element 10 with a query response message (see lower arrow in Fig. 3). In case of a positive information comprising the address and cell information of the neighboring access network element, the process may proceed to step 4 according to Fig. 1. Otherwise, in case of a negative response, the requesting access network element may either repeat the information request after a specific time when no entry is found for the neighboring access network element, or repeat the registration procedure when the negative response is caused by a missing entry in the resolver's repository for the requesting access network element.

Returning to Fig. 1, when the positive response is received in step 3 from the server 30, the access network element 10 may proceed to step 4. In step 4, after having received the IP connectivity information, the requesting access network element 10 (eNB) may contact or connect to the new neighbour site, for example via a corresponding interface, such as an X2 Interface, and request the other access network element 20 (eNB) for further needed operational cell and site information which was not already provided by the resolver. On the other hand, the other access network element 20 may be able to request corresponding information from the requesting access network element 10 by using a connection over this link.

As described above, in the example described in connection with Figs. 1 to 3, it is possible to provide a configuration procedure where a server or resolver is able to learn and maintain the radio access cell and site configuration autonomously from all the access network elements (eNB) without any operator intervention or off-line planning. Furthermore, it is possible to provide missing information about neighbour cells to a requesting access network element by different identification criteria. Hence, it is for example possible to resolve a given Cell Global Identity to the IP connectivity information needed to establish an IP connection between the requesting eNB and a neighbor site parenting a newly discovered neighbor cell.

As a further modification of the example of the embodiment of the invention described above, the information stored by the resolver for being available for a further information request from another communication network node (e.g. the requesting access network element) are as small as possible. For example, the information stored may suffice for identifying the other access network element (e.g. eNB 20) on the basis of information achievable for the requesting access network element (eNB 10), i.e. the search identifier, and to provide enough information enabling the requesting access network element to contact the other access network element, i.e. to get connectivity to the neighbor. This allows to store only a minimum amount of data so that the necessary storage capacity may be reduced. Furthermore, it can be avoided to store the same data at various places within the network. On the other hand, any further information of the neighbour cells and site may be obtained from the neighboring access network element itself, i.e. directly from the origin.

As still a further modification of the example of the embodiment of the invention described above, in a situation where, for example, a direct connection between the access network elements is inhibited, for example since a corresponding interface, like an X2 interface, is not established or blocked by administrative means, the neighbor information may sent to the server or resolver during the registration phase or directly thereafter (i.e. when the confirmation message for the registration is received). The server may then store all information received and return the information to a requesting communication network node (e.g. access network node) when the information request is received and processed. This means that the information about the neighbor site can be derived by queries later on without a direct connection to the neighbour site, e.g. without a given X2 connectivity.

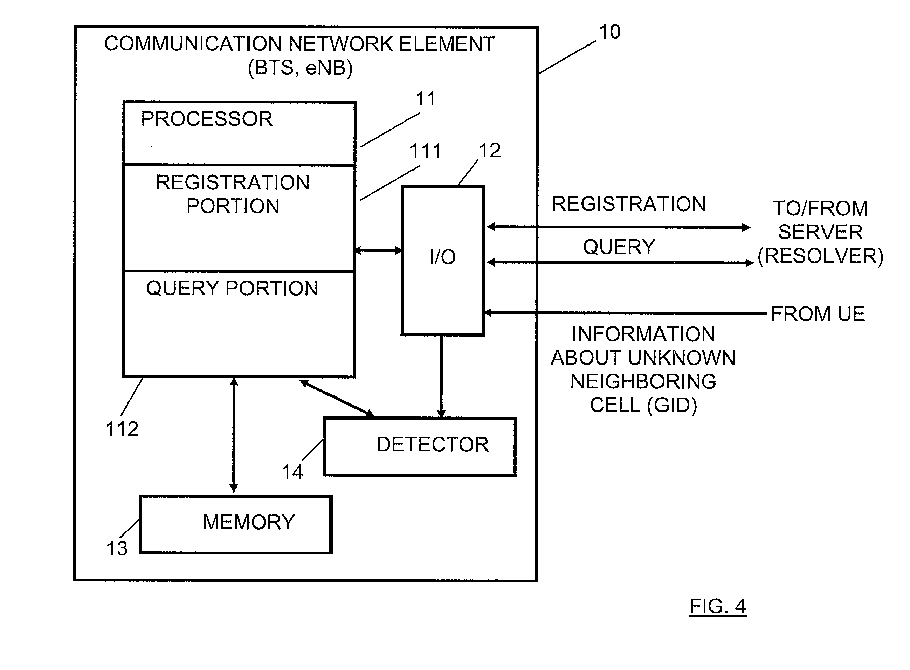

Next, referring to Fig. 4, an example of a structure of an access network element as the requesting site is described.

According to Fig. 4, the configuration access network element 10, such as an eNB, may comprise several portions and members. It is to be noted that the structure of the access network element 10 depicted in Fig. 4 is simplified in order to show only those parts useful for understanding embodiments of the present invention. As known to those skilled in the art, an access network element may comprise several other elements or functions not shown herein. The access network element 10 may comprise a processor portion 11, such as a CPU or the like, an input/output (I/O) portion 12 representing an interface to other elements shown, for example, in Fig. 1, and comprising, for example, transceiver elements for an air or wire interface, for example, a memory portion 13 in which, amongst others, data can buffered, and a detector portion 14 usable for detecting the presence of an unknown neighbor cell. The I/O portion 12 may be connected to the processor 11 and used for receiving data from other network elements (for example registration data as depicted in Fig. 2, information request data as depicted in Fig. 3, information about unknown neighbor cells, such as a GID, from a UE, and the like) to the processor 11 and may forward data received from the processor 11 to the network elements, such as the server or resolver 30 (for example registration data as depicted in Fig. 2, information request data as depicted in Fig. 3). The I/O portion 12 may also be used for communication with the neighbor site. The memory portion 13 may be connected to the processor and may store/buffer data and programs used by the processor 11. The detector portion 14 may be connected with the I/O portion 12 for detecting that an unknown cell ID or the like is received by determining, for example, that a GID of an unknown cell is received, and to the processor portion 11 for informing it thereabout. The detector portion 14 may also be part of the processor portion 11. The processor portion 11 may comprise, for example among others a registration portion 111 which may be used for deciding on the execution of the registration procedure and performing the same with the server 30 (see for example Fig. 2), and a query portion 112 which may be used for deciding on the execution of the information request procedure (e.g. when the detector portion 14 detects the presence of the neighbor cell) and performing the same with the server 30 (see for example Fig. 3).

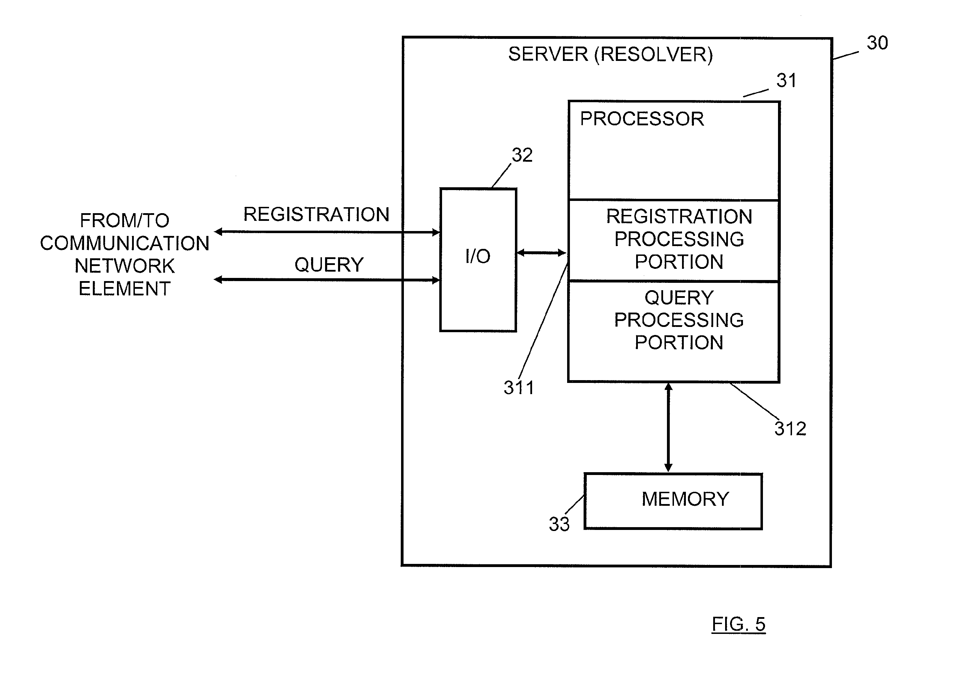

Next, referring to Fig. 5, an example of a structure of a server node as the configuration control element (server or resolver 30) is described.

According to Fig. 5, the server node 30 may comprise several portions and members. It is to be noted that the structure of the server node 30 depicted in Fig. 5 is simplified in order to show only those parts useful for understanding embodiments of the present invention. As known to those skilled in the art, a server node may comprise several other elements or functions not shown herein. The server node 30 may comprise a processor portion 31, such as a CPU or the like, an input/output (I/O) portion 32 representing an interface to other elements shown, for example, in Fig. 1, and comprising, for example, transceiver elements for an air or wire interface, for example, and a memory portion 33 which can be used as the storage for storing the data and information received from the access node element registrations and as a buffer for other data. The I/O portion 32 may be connected to the processor 31 and used for receiving data from other network elements (for example registration data as depicted in Fig. 2, information request data as depicted in Fig. 3, and the like) to the processor 31 and may forward data received from the processor 31 to the network elements, such as the access network element 10, 20 (for example registration data as depicted in Fig. 2, information request data as depicted in Fig. 3). The memory portion 33 may be connected to the processor and may store/buffer data and programs used by the processor 31, and the database. The processor portion 31 may comprises, for example among others a registration processing portion 311 which may be used for processing the data received with a registration request from an access network element (see for example Fig. 2), and a query processing portion 312 which may be used for processing the information received with the information request (see for example Fig. 3).

As described above, there is proposed a mechanism for autonomously configuring a communication network, in particular, apparatuses and methods providing an improved procedure for self-learning and configuring repository for access network cell and site configuration. The proposed mechanism may be thus useful for achieving a self-learning and autonomous server solutions, neighboring cell discoveries, and radio network interface organizations.

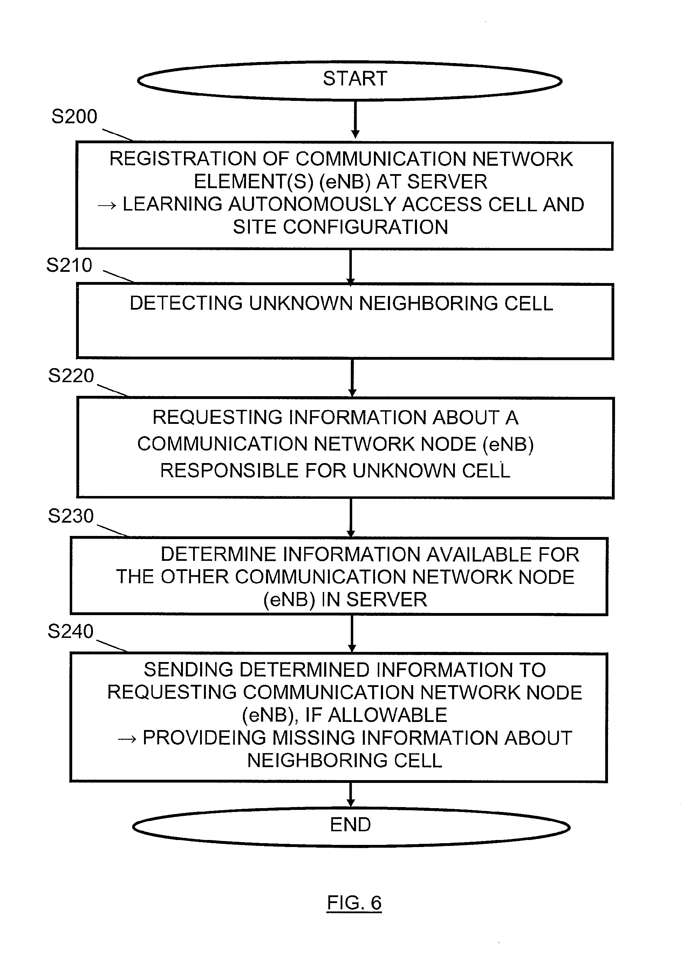

In Fig. 6, a flow chart showing an example of an embodiment of the invention for a network configuration and organization procedure is depicted.

In step S200, a registration of at least one communication network element, such as an access network element, at a server may be executed. The information of the registered communication network node may be stored in the server, for example in a database. This may result in an autonomous learning of specific information, such as of access cell and site information, at the server.

Then, in a step S210, a communication network node may detect a presence of an unknown neighboring communication cell, for example by using a detector 14 as shown in Fig. 4. As a result of this detection, in a step S220, the communication network node may request from the server information regarding another communication network node, e.g. of another access network element, to which the neighboring communication cell may be assigned.

In step S230, the server may determine the information available for the other communication network node on the basis of the received information, for example, by comparing the information with information stored in the storage. As a result, information to be returned to the requesting communication network node may be determined wherein it may be also checked whether the transmission of the information to the requesting communication network node is allowable (e.g. whether the requesting node is known/registered at the server).

Then, in a step S240, the request of the requesting communication network node may be responded by sending the determined information. Thus, missing information about the neighbor cell and the responsible communication network node can be made available and a further communication between the communication network nodes may be enabled.

As a result, the network configuration can be organized at the server and the communication network node.

It is to be noted that even though the above embodiments are described in an LTE environment representing a future network architecture, the described measures and procedures may also be implemented in communication systems using existing technologies, such as 3GPP based networks or the like. It is obvious for those skilled in the art that the involved parameters and procedures are to be adapted to the existing technology, interfaces and architecture.

For the purpose of the present invention as described herein above, it should be noted that
- an access technology comprising, for example, an access network element or site may be any technology by means of which a user equipment can access an access network (e.g. via a base station or generally an access node, an enhanced Node B or the like). Any present or future technology, such as WLAN (Wireless Local Access Network), WiMAX (Worldwide Interoperability for Microwave Access), Long Term Evolution (LTE), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed lines but also circuits switched access technologies; access technologies may be distinguishable in at least two categories or access domains such as packet switched and circuit switched, but the existence of more than two access domains does not impede the invention being applied thereto,
- an access network may be any device, apparatus, unit or means by which a station, entity or other user equipment may connect to and/or utilize services offered by the access network; such services include, among others, data and/or (audio-) visual communication, data download etc.;
- a user equipment may be any device, apparatus, unit or means by which a system user may experience services from an access network such as a mobile phone, personal digital assistant PDA, or computer;
- method steps likely to be implemented as software code portions and being run using a processor at a network element or terminal (as examples of devices, apparatuses and/or modules thereof, or as examples of entities including apparatuses and/or modules therefor), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, apparatuses, units or means likely to be implemented as hardware components at a terminal or network element, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, apparatuses, units or means can be implemented as individual devices, apparatuses, units or means, but this does not exclude that they are implemented in a distributed fashion throughout the system, as long as the functionality of the device, apparatus, unit or means is preserved,
- an apparatus may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

Although the present invention has been described herein before with reference to particular embodiments thereof, the present invention is not limited thereto and various modification can be made thereto.

It should be understood that the above description and accompanying figures are merely intended to illustrate the present invention by way of example only. The preferred embodiments of the present invention may thus vary within the scope of the attached claims.

## Claims

1. An apparatus comprising:
a registration requestor configured to request a registration of a communication network node at a server,
a detector configured to detect a presence of an unknown neighboring communication cell,
an information requestor configured to request from the server information regarding another communication network node to which the neighboring communication cell is assigned,
a receiver configured to receive the information, and
a processor configured to process the received information.

2. The apparatus according to claim 1, wherein
the registration requestor is configured to request the registration of the communication network node at the server in at least one of the following cases:
initial start-up of the communication network node after an installation thereof;
re-start of the communication network node after a reset operation;
detection of a modification of a cell configuration of the communication network node;
detection of a removal of at least one of cells of the communication network node;
receipt of a non-acknowledgement after a preceding request for a registration.

3. The apparatus according to any of claims 1 and 2, wherein
the registration requestor is configured to send, when requesting the registration of the communication network node at the server, at least one of
a global identification of the communication network node,
at least one public routable site Internet Protocol address of the communication network node, and
a global cell identification of at least one cell assigned to the communication network node.

4. The apparatus according to claim 3, wherein
the registration requestor is further configured to send, when requesting the registration of the communication network node at the server, at least one of an assigned physical cell identifier, and streaming control protocol configuration information.

5. The apparatus according to any of claims 1 to 4, wherein
the information requestor is configured to request from the server information regarding the another communication network node after a global cell identification of the unknown neighboring cell is discovered.

6. The apparatus according to any of claims 1 to 5, wherein
the information requestor is configured to send, when requesting from the server the information regarding the another communication network node, a global identifier of the communication network node and an identifier of the unknown neighboring cell.

7. The apparatus according to any of claims 1 to 6, wherein
the processor is configured to process an information comprising one of
connectivity information of the another communication network node and of cells assigned thereto; or
an indication that no information can be provided on the request and a reason for this, wherein the reason comprises an indication that no information for the another communication network node are present, or an indication that the requesting communication network node can not be identified by the server.

8. The apparatus according to any of claims 1 to 7, wherein the processor is further configured to
initiate establishing of a connection between the communication network node and the another communication network node, on the basis of the information received by the receiver, and
to request further information from the another communication network node.

9. The apparatus according to any of claims 1 to 8, wherein the communication network node and the another communication network node comprise at least one of an enhanced Node B and a base transceiver station of the communication network.

10. A method comprising:
requesting a registration of a communication network node at a server,
detecting a presence of an unknown neighboring communication cell,
requesting from the server information regarding another communication network node to which the neighboring communication cell is assigned,
receiving the information, and
processing the received information.

11. The method according to claim 10, further comprising
request the registration of the communication network node at the server in at least one of the following cases:
initial start-up of the communication network node after an installation thereof;
re-start of the communication network node after a reset operation;
detection of a modification of a cell configuration of the communication network node;
detection of a removal of at least one of cells of the communication network node;
receipt of a non-acknowledgement after a preceding request for a registration.

12. The method according to any of claims 10 and 11, further comprising
sending, when requesting the registration of the communication network node at the server, at least one of
a global identification of the communication network node,
at least one public routable site Internet Protocol address of the communication network node, and
a global cell identification of at least one cell assigned to the communication network node.

13. The method according to claim 12, further comprising
sending, when requesting the registration of the communication network node at the server, at least one of an assigned physical cell identifier, and streaming control protocol configuration information.

14. The method according to any of claims 10 to 13, wherein the requesting from the server information regarding the another communication network node is performed after a global cell identification of the unknown neighboring cell is discovered.

15. The method according to any of claims 10 to 14, further comprising
sending, when requesting from the server the information regarding the another communication network node, a global identifier of the communication network node and an identifier of the unknown neighboring cell.

16. The method according to any of claims 10 to 15, further comprising
processing an information comprising one of
connectivity information of the another communication network node and of cells assigned thereto; or
an indication that no information can be provided on the request and a reason for this, wherein the reason comprises an indication that no information for the another communication network node are present, or an indication that the requesting communication network node can not be identified by the server.

17. The method according to any of claims 10 to 16, further comprising
initiating establishing of a connection between the communication network node and the another communication network node, on the basis of the received information, and
requesting further information from the another communication network node.

18. The method according to any of claims 10 to 17, wherein the communication network node and the another communication network node comprise at least one of an enhanced Node B and a base transceiver station of the communication network.

19. An apparatus comprising:
a receiver configured to receive a request for registration of a communication network element,
a registrator configured to execute the registration of the communication network node,
a storage configured to store information of the communication network node,
a responder configured to send a message to the communication network node related to the registration thereof,
an information request receiver configured to receive a request from the communication network node for information regarding another communication network node on the basis of cell related information,
a request processor configured
to compare information received with the request for information regarding the another communication network node with information stored in the storage, and
to determine information to be returned to the requesting communication network node on the basis of the comparison, and
a request responder configured to respond to the request from the communication network node for information regarding another communication network node on the basis of the information determined by the processor.

20. The apparatus according to claim 19, wherein
the registrator is configured to execute the registration of the communication network element on the basis of at least one of
a global identification of the communication network node,
at least one public routable site Internet Protocol address of the communication network node, and
a global cell identification of at least one cell assigned to the communication network node.

21. The apparatus according to claim 20, wherein
the registrator is configured to execute the registration of the communication network element on the basis of at least one of an assigned physical cell identifier, and streaming control protocol configuration information.

22. The apparatus according to any of claims 19 to 21, wherein
the responder is configured to send a message to the communication network node related to the registration thereof, said message either confirming the registration of the communication network element or indicating a non-acknowledgement of the registration together with a reason for this.

23. The apparatus according to any of claims 19 to 22, wherein
the request processor is configured to process, on the basis of the information received by the request receiver, a global identifier of the communication network node and an identifier of a cell of the another communication network node.

24. The apparatus according to any of claims 19 to 23, wherein
the processor is configured to determine, as the information to be returned to the requesting communication network node, one of
connectivity information of the another communication network node and of cells assigned thereto; or
an indication that no information can be provided on the request and a reason for this, wherein the reason comprises an indication that no information for the another communication network node are present, or an indication that the requesting communication network node can not be identified.

25. The apparatus according to any of claims 19 to 24, wherein the communication network node and the another communication network node comprise at least one of an enhanced Node B and a base transceiver station of the communication network.

26. A method comprising:
receiving a request for registration of a communication network element,
executing the registration of the communication network node,
storing information of the communication network node,
sending a message to the communication network node related to the registration thereof,
receiving a request from the communication network node for information regarding another communication network node on the basis of cell related information,
processing the request by
comparing information received with the request for information regarding the another communication network node with information stored in the storage, and
determining information to be returned to the requesting communication network node on the basis of the comparison, and
responding to the request from the communication network node for information regarding another communication network node on the basis of the determined information.

27. The method according to claim 26, further comprising
executing the registration of the communication network element on the basis of at least one of
a global identification of the communication network node,
at least one public routable site Internet Protocol address of the communication network node, and
a global cell identification of at least one cell assigned to the communication network node.

28. The method according to claim 27, further comprising
executing the registration of the communication network element on the basis of at least one of an assigned physical cell identifier, and streaming control protocol configuration information.

29. The method according to any of claims 26 to 28, wherein the sending of the message to the communication network node related to the registration thereof further comprises sending of a message either confirming the registration of the communication network element or indicating a non-acknowledgement of the registration together with a reason for this.

30. The method according to any of claims 26 to 29, wherein
the processing is executed on the basis of the information received by the request receiver comprising a global identifier of the communication network node and an identifier of a cell of the another communication network node.

31. The method according to any of claims 26 to 30, wherein
the determining of the information to be returned to the requesting communication network node determined one of
connectivity information of the another communication network node and of cells assigned thereto; or
an indication that no information can be provided on the request and a reason for this, wherein the reason comprises an indication that no information for the another communication network node are present, or an indication that the requesting communication network node can not be identified.

32. The method according to any of claims 26 to 31, wherein the communication network node and the another communication network node comprise at least one of an enhanced Node B and a base transceiver station of the communication network.

33. A method comprising
executing registration of at least one communication network element at a server,
storing information of the registered communication network node in the server,
detecting at a communication network node a presence of an unknown neighboring communication cell,
requesting, by the communication network node, from the server information regarding another communication network node to which the neighboring communication cell is assigned,
processing the request by
comparing information received with the request for information regarding the another communication network node with information stored in the storage, and
determining information to be returned to the requesting communication network node on the basis of the comparison, and
responding to the requesting communication network node,
organizing a network configuration at the server and the communication network node.

34. A computer program product for a computer, comprising software code portions for performing the steps of any of claims 10 to 18, or 26 to 32, or 33, when said product is run on the computer.

35. A computer program product according to claim 34, wherein said computer program product comprises a computer-readable medium on which said software code portions are stored.

36. A computer program product according to claim 34, wherein said computer program product is directly loadable into the internal memory of the computer.
